Europäisches Patentamt

European Patent Office

Office européen des brevets

(11) Publication number: **0 191 635 B1**

# EUROPEAN PATENT SPECIFICATION

(45) Date of publication of patent specification: **29.05.91**

(51) Int. Cl.⁵: **G11B 5/21, G11B 5/127, G11B 5/17, G11B 5/31**

(21) Application number: **86300949.4**

(22) Date of filing: **12.02.86**

(54) Magnetic head.

(30) Priority: **13.02.85 JP 24305/85**

(43) Date of publication of application:
**20.08.86 Bulletin 86/34**

(45) Publication of the grant of the patent:
**29.05.91 Bulletin 91/22**

(84) Designated Contracting States:
**DE FR GB**

(56) References cited:
**EP-A- 0 115 842**
**EP-A- 0 140 977**

**PATENT ABSTRACTS OF JAPAN, vol. 7, no. 150 (P-207)[1295], 30th June 1983; & JP - A - 58 60419**

**PATENT ABSTRACTS OF JAPAN, vol. 7, no. 90 (P-191)[1235], 14th April 1983; & JP - A - 58 17522**

**PATENT ABSTRACTS OF JAPAN, vol. 10, no. 93 (P-445)[2150], 10th April 1986; & JP - A - 60 226 006**

(73) Proprietor: **HITACHI, LTD.**
**6, Kanda Surugadai 4-chome**
**Chiyoda-ku, Tokyo 100(JP)**

(72) Inventor: **Otomo, Shigekazu**
**259-1, Kamihirose**
**Sayama-shi Saitama-ken(JP)**
Inventor: **Morikawa, Juichi**
**2774-29, Mawatarimukaino**
**Katsuta-shi Ibaraki-ken(JP)**
Inventor: **Kumasaka, Noriyuki**
**1-1-24, Suehiro-cho**
**Ome-shi Tokyo(JP)**
Inventor: **Fujiwara, Hideo**
**3-3-16, Kubogaoka Moriyamachi**
**Kitasoma-gun Ibaraki-ken(JP)**
Inventor: **Yamashita, Takeo**
**17-305, Esuteito Tachikawa 6-17-1, Ichiban-cho**
**Tachikawa-shi Tokyo(JP)**
Inventor: **Inagoya, Osamu**
**394, Shimoguri Chiyokawamura**
**Yuki-gun Ibaraki-ken(JP)**

EP 0 191 635 B1

PATENT ABSTRACTS OF JAPAN, vol. 2, no. 149 (E-78), 13th December 1978, page 9441 E 78; & JP - A - 53 116 810

Inventor: **Tottori, Takeshi**
**1-2-6-306, Togashira**
**Toride-shi Ibaraki-ken(JP)**
Inventor: **Hayashi, Masashi**
**2031-347, Tsudakomagata**
**Katsuta-shi Ibaraki-ken(JP)**

(74) Representative: **Calderbank, Thomas Roger et al**
**MEWBURN ELLIS & CO. 2/3 Cursitor Street London EC4A 1BQ(GB)**

## Description

The present invention relates to magnetic heads.

There is now a great desire to improve magnetic recording techniques, and in particular to achieve a higher density of magnetic recording.

It is well known that increasing the coercive force $H_c$ of the magnetic recording medium is advantageous for achieving this. However, a magnetic field having a high intensity and a sharp distribution is needed for recording a signal on a magnetic recording medium of high coercive force. Thus, when using a conventional ferrite of high permeability for a magnetic head, the intensity of a recording magnetic field to be attained is limited because the saturation flux density $B_s$ of the ferrite is below 5500 G (0.55 T). This has led to the problem of insufficient recording especially when the recently developed magnetic tapes of high coercive force are employed.

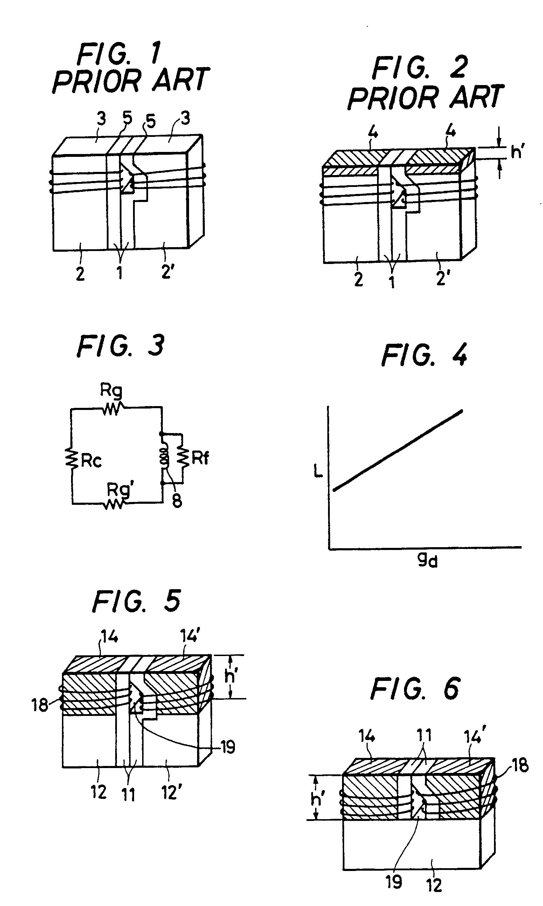

To solve this problem, there has been proposed a magnetic head wherein as shown in Fig. 1, members 1 of a magnetic metal material having a high saturation flux density are located on either side of the functional gap, the head also having core members 2,2' made of a high permeability ferrite, to generate an intense recording magnetic field. The surface 3 faces the magnetic tape. (The details are described in the official gazette of JP-A-51-140708.) Also, to improve the abrasion-resistance of the head, there has been proposed a magnetic head wherein, as shown in Fig. 2, the surfaces 4 of the high permeability ferrite core members 2 and 2' facing the magnetic tape are made of a non-magnetic substance of excellent abrasion-resistance (the details are described in JP-A-58-17522). In Fig. 2, numeral 1 designates the members of magnetic metal. Likewise, a magnetic head has been proposed wherein the surface facing the tape is made of a non-magnetic substance, a rear core part is made of a high permeability ferrite and a magnetic metal substance of high saturation flux density is provided in the vicinity of the functional gap (the details are described in JP-A-53-116809. It is stated in JP-A-53-116809 that, since the boundary 5 between the magnetic metal substance 1 and the high permeability ferrite 2 or 2' acts as a pseudo gap in the head of Fig. 1, which is undesirable, the part of the surface of the ferrite core facing the tape is made of a non-magnetic substance as shown in Fig. 2, thereby to prevent the pseudo gap from appearing. JP-A-58060419 discloses a magnetic head comprising two magnetic layers which form a coil window and are supported by two cores of non-magnetic material. The two cores provide a sliding surface resistant to wear and with a low level of reproduction noise.

In addition, a magnetic head in which a pair of magnetic metal members coupled on a non-magnetic substrate are opposed through a functional gap is described in JP-A-59-142716 and EP-A-0140977.

In general, it can be said that the characteristics of a magnetic head are improved if the output C per turn of a coil is increased and the inductance L per turn of the coil is decreased. It is known that the output which can be derived from the magnetic head increases in proportion to the number of turns, and that the inductance of the magnetic head increases in proportion to the square of the number of turns. An amplifier circuit is required, and so the inductance needs to be suppressed below a certain value determined for each circuit. Accordingly, in order to produce a magnetic head having a high output with the inductance held below the above value, it is necessary to raise the output per turn as much as possible, i.e. to raise the recording and reproducing efficiencies, and to lower the inductance per turn so that the number of turns can be increased within a fixed inductance. In other words, if L denotes the value of the inductance, a higher output C should desirably be obtained for a fixed value L or $\sqrt{L}$.

Therefore, the performance of a magnetic head can be expressed by the ratio $C/\sqrt{L}$ of the output C to the square root of the inductance.

The present invention seeks to overcome or at least ameliorate, these problems. It does this by providing a head in which the coil encircles not only the members of magnetic metal, but also adjacent parts of a substrate of non-magnetic material. In this way it is possible to produce a magnetic head which has high recording and reproducing efficiencies, and a low inductance per turn of the coil. It is thus suitable for use with a magnetic recording medium of high coercive force.

The substrate and the magnetic metal members may be supported on one core part of a high permeability ferrite, or the core part may be provided on a side surface of the head, a surface perpendicular to the head surface which, in use, faces the magnetic recording medium.

The magnetic metal members may be linear in that surface facing the magnetic recording medium, but preferably, are substantially V-shaped, with the apexes of the "Vs" being flattened and located adjacent one another, to define the functional gap of the head therebetween.

Embodiments of the invention will now be described in detail, by way of example, with reference to the accompanying drawings, in which:

Figs. 1 and 2 are perspective views each showing a known magnetic head and have already been discussed;

Fig. 3 is a magnetic circuit diagram equivalent to a magnetic head;

Fig. 4 is a graph showing the relationship between the gap depth $g_d$ and the inductance L of a magnetic head;

Figs. 5, 6, 7a and 8 are perspective views of embodiments of magnetic heads according to the present invention;

Fig. 7b is a side view of the magnetic head shown in Fig. 7a;

Fig. 9 is a perspective view showing another known magnetic head;

Figs. 10, 11, 12 and 13 are perspective views of further embodiments of magnetic heads according to the present invention; and

Fig. 14 is a perspective view of a core for explaining the dimensions of a magnetic head.

The magnetic circuit equivalent to a magnetic head is schematically shown in Fig. 3. Here, a functional gap has a magnetic reluctance $R_g$, a core has a magnetic reluctance $R_c$, a rear gap has a magnetic reluctance $R_g'$, and part of a coil 8 has a magnetic reluctance $R_f$. The inductance L is denoted as $L = N^2/R_t$ where $R_t$ indicates the entire magnetic reluctance viewed from the coil, and N indicates the number of turns of the coil. $R_t$ can be expressed as:

$$\frac{1}{R_t} = \frac{1}{R_g + R_g' + R_c} + \frac{1}{R_f}$$

Accordingly, the inductance can be decreased by increasing any of $R_g$, $R_g'$, $R_c$ or $R_f$. On the other hand, the reproducing efficiency n of the magnetic head can be expressed as:

$$\eta = \frac{R_g}{R_g + R_g' + R_c}$$

Accordingly, the reproducing efficiency can be raised by increasing the reluctance $R_g$ or decreasing the reluctances $R_g'$ or $R_c$. Of these reluctances, the reluctance $R_g$ is substantially fixed by the length and depth of the gap. Accordingly, in order to fabricate an excellent magnetic head, it needs to be designed so as to decrease the reluctances $R_g'$ and $R_c$ and to increase the reluctance $R_f$, as compared with a standard head.

As the gap depth $g_d$ of the magnetic head shown in Fig. 1 decreases, the inductance L is reduced as illustrated in Fig. 4. This is based on the increase of $R_g$ in Fig. 3. The reason why a non-zero inductance is exhibited even at $g_d = 0$, is that the reluctance $R_f$ is comparatively low, so a leakage magnetic flux exists around the coil. The units of the ordinate and of abscissa in Fig. 4 are arbitrary. In order to increase the reluctance $R_f$ and reduce the leakage magnetic flux, the cross-sectional area of the core in the coil may be reduced, thereby to decrease the length of the coil, and also to lower the permeability of the core. However, both these measures increase the magnetic reluctance $R_c$ of the core and lower the reproducing efficiency n, so that the configuration of the head must be selected so as to maximise the value of the ratio $C/\sqrt{L}$ between the output C and the square root of the inductance as stated before.

The inventors of the present invention have measured the outputs and inductances of the magnetic head shown in Fig. 1 and a magnetic head wherein the high permeability ferrite members 2 and 2' of the magnetic head in Fig. 1 are replaced with members of a non-magnetic substance. As a result, it has been revealed that a magnetic head employing a non-magnetic substance has a lower output per turn of the coil than a magnetic head employing high permeability ferrite, but also has a lower inductance. Thus the value of the ratio $C/\sqrt{L}$ is greater in a magnetic head employing a non-magnetic substance. This is based on the fact that, by substituting a non-magnetic substance for the high permeability ferrite of the core members 2 and 2' in the coil, the cross-sectional area of the magnetic core of high permeability is reduced to the cross-sectional area of the magnetic metal substance 1 so as to increase the reluctance $R_f$, any increase in the reluctance $R_c$ is suppressed to be small owing to the presence of the magnetic metal substance of high permeability.

In order to fabricate a magnetic head of high performance in which the value $C/\sqrt{L}$ is greater than the above magnetic head (in which the high permeability ferrite of the members 2 and 2' is replaced by a non-magnetic substance) the magnetic head of the present invention has a structure such as that shown in Fig. 5. In this magnetic head, a substrate which extends from a surface facing a tape to a coil of the head is constructed of members 14 and 14' of a non-magnetic substance, whereby the magnetic material inside a coil 18 consists substantially entirely of parts 11 of a magnetic metal only, to increase the magnetic reluctance $R_f$ and to lower the inductance. Also a core part (except the coil) is constructed of members 12,12' of a high permeability ferrite, whereby the increase of the magnetic reluctance $R_c$ of the core is suppressed to suppress any decrease in the reproducing efficiency of the head. Thus $C/\sqrt{L}$ may be further enhanced. Moreover, the head of the present invention may permit enhancement of abrasion-resistance and reduction of the tape rubbing noise, as in the head shown in Fig. 2. Also shown in Fig. 5 is a coil window 19 through which passes the coil 18.

In the magnetic head shown in Fig. 2, the reluctance $R_f$ is nearly equal to that of a magnetic head employing high permeability ferrite as shown in Fig. 1, and hence the inductance does not vary. Also the vicinity of the surface facing the magnetic tape is made of a non-magnetic substance and therefore the reluctance $R_c$ increases somewhat to lower the efficiency of reproduction. Therefore, the value $C/\sqrt{L}$ is equal to or somewhat lower than that of the magnetic head employing a high permeability ferrite as shown in Fig. 1. Accordingly, the embodiment of the magnetic head of the present invention shown in Fig. 5 is an excellent magnetic head which has the highest value for $C/\sqrt{L}$ of the magnetic heads discussed above and which simultaneously has a good abrasion-resistance and a low rubbing noise characteristic.

An embodiment of a magnetic head according to the present invention in which the whole of the rear core is constructed of a member of high permeability ferrite 12 is shown in Fig. 6. With this head, since the magnetic reluctance $R_g'$ of the rear gap in Fig. 3 is eliminated, the reproduction efficiency may be further increased. The gap between the members 11 of magnetic metal and the high permeability ferrite 12 is very small, and magnetic reluctance attributable to this gap may be ignored. In Fig. 6, parts 14, 14', 18 and 19 are similar to those in Fig. 5.

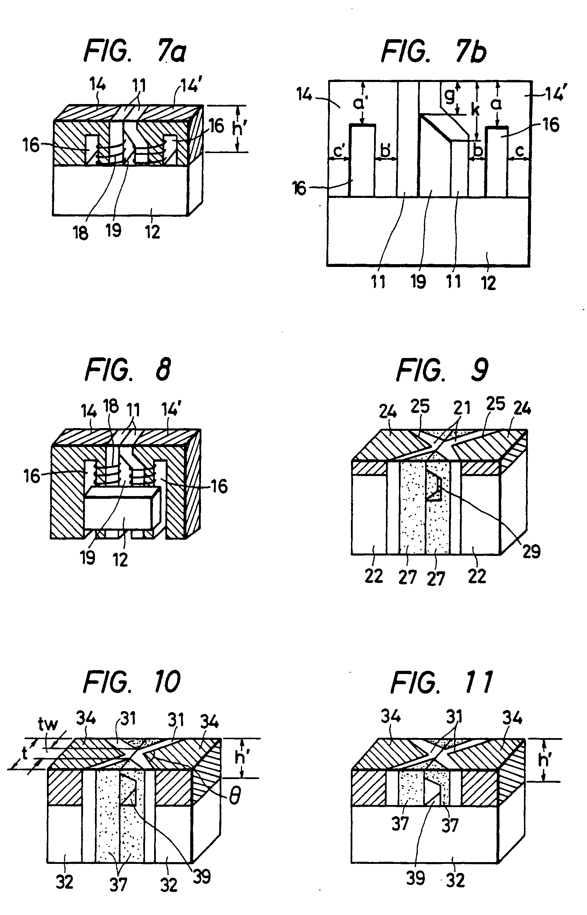

Another embodiment of a magnetic head according to the present invention is shown in Fig. 7a, in which a core employing members of a non-magnetic substance 14 and 14' is provided with grooves 16 substantially parallel to the plane of the functional gap, a coil 18 is wound between the grooves and a coil window 19, and a member of high permeability ferrite 12 is joined as a rear core in order to construct a rear magnetic circuit. The parts of the head of a magnetic metal of the head are indicated by numeral 11. With this magnetic head, by winding the coil 18 between the grooves 16 and the coil window 19, the length of the coil may be reduced to lower further the inductance of the head. It is also possible to provide a groove 16 in one side of the core only. Moreover, since no rear gap is included as in the case of Fig. 6, the magnetic reluctance $R_g'$ of the rear gap can be eliminated, to raise the reproducing efficiency. A side view of this magnetic head is shown in Fig. 7b. Reference numerals in Fig. 7b are the same as in Fig. 7a, but the coil 18 is omitted from Fig. 7b. Now, the position and shape of the groove 16 will be described.

The groove 16 may be shaped so that the coil 18 can be wound substantially between the coil window 19 and the groove 16. In order to increase the strength of the core it is desirable that the distance $\underline{a}$ or $\underline{a'}$ from the upper end of the groove 16 to the surface facing the tape is greater than a gap depth $\underline{g}$, and that that distance should desirably be nearly equal to the distance $\underline{k}$ from the surface facing the tape to the lower end of the slant part of the coil window 19. It is also possible to make the distance $\underline{a}$ or $\underline{a'}$ longer than the distance $\underline{k}$, within a range in which the coil 18 can be wound. The distances $\underline{b}$ and $\underline{b'}$ between the grooves 16 and the corresponding parts 11 of magnetic metal defining the coil window 19 and the distances $\underline{c}$ and $\underline{c'}$ from the respective grooves 16 to the outer periphery of the core should desirably be made 100 $\mu$m or more so that the strength of the core is not reduced.

Another embodiment of a magnetic head according to the present invention is shown in Fig. 8. In this embodiment, a member of high permeability ferrite 12 forming a core part is joined to a side surface of the magnetic head. The effect of this magnetic head is that the coil 18 can be prefabricated and mounted between the coil window 19 and the grooves 16 before the attachment of the high permeability ferrite core 12. Hence the coil winding step is facilitated. This effect is important for a magnetic head according to the present invention in which it is sought to increase the output by lowering the inductance and increasing the number of turns. The other symbols used in Fig. 8 are the same as in Fig. 7a. The expression "side surface of the magnetic head" signifies a surface which is substantially perpendicular to the surface facing the magnetic recording medium and which is substantially parallel to the direction of movement of the magnetic recording medium.

In each of the embodiments of a magnetic head according to the present invention illustrated in Fig. 5, Fig. 6, Fig. 7a and Fig. 8, the functional gap in the surface facing the magnetic tape is parallel to the end face of the parts 11 of magnetic metal, that is, it is parallel to the boundaries between the members 11 of magnetic metal and the parts 14, 14' of non-magnetic material. Such an end face parallel to the functional gap is undesirable because it causes a contour effect. To solve this drawback, a magnetic head has been proposed in Japanese Patent Application No. 59-87692 wherein, as shown in Fig. 9, a magnetic metal member 21 is coupled to a high permeability ferrite member 22 and a non-magnetic member 24, to form an angled core portion. The interface 25 between the magnetic metal member 21 and the non-magnetic member 24 is then not parallel to the functional gap in the surface facing the magnetic tape. Also shown in Fig. 9 are a non-magnetic coupling material 27 such as glass, and a coil window 29. The present invention is also effective for such a magnetic head.

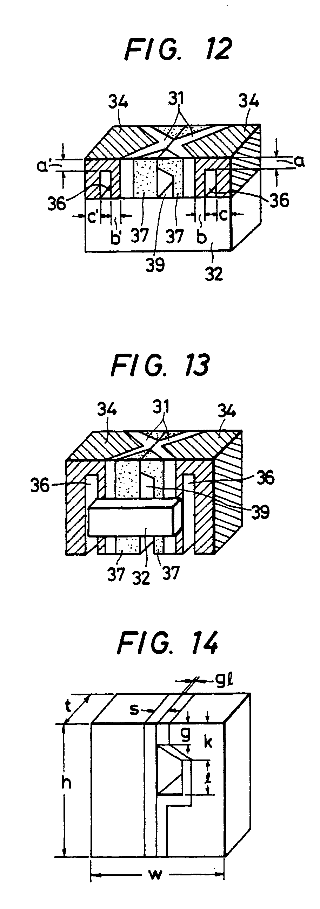

Magnetic heads such as those shown in Figs. 10 and 11, in each of which the portion of the non-magnetic substance 24 in the magnetic head of Fig. 9 is expanded to the coil portion, have effects similar to those of the magnetic heads shown in Figs. 5 and 6. Similarly, magnetic heads such as those shown in Figs. 12 and 13, in each of which the non-magnetic substance is provided with grooves 36 have effects similar to those of the magnetic heads shown in Figs. 7a and 8. The coil is omitted from the illustration of each of Figs. 9 to 13. In Figs. 10 to 13, there is shown a magnetic metal substance 31, a high permeability ferrite 32 forming the core part, a non-magnetic substance 34 forming the substrate, a groove 36, a non-magnetic coupling substance 37 such as glass, and a coil window 39.

The magnetic metal members 31 of the magnetic heads of the present invention shown in Figs. 10 to 13 will now be further described. The magnetic metal members 31 consist of a pair of magnetic metal films, each of which is substantially V-shaped, and which have their apexes butted to each other through the non-magnetic gap members so as to form the functional gap. The V-shaped film is exposed at the surface facing the magnetic recording medium. In addition, the ends of the apexes of the pair of films are planes which are parallel to each other and which are substantially orthogonal to the direction of movement of the magnetic recording medium. The width tw of such a plane, which is indicated by the lines of intersection between the planes of the ends of the protrusions and the surface facing the magnetic recording medium, corresponds to the track width. The magnetic metal films 31 are formed on a substrate which has angled projections corresponding to the V-shaped parts of the films 31 and which is made of a non-magnetic substance 34 and the high permeability ferrite 32 or made of the non-magnetic substance 34 only.

In the magnetic head of the present invention shown in Fig. 10 a unit is formed by the high permeability ferrite 32 and the non-magnetic substance 34 as stated before. Magnetic heads in which the corresponding unit is made entirely of high permeability ferrite (without using the non-magnetic substance 34) are disclosed in JP-A-58-155513 (European Patent Application No. 84.303167.5) and JP-A-59-207415 (EP-A-0125891). The magnetic head of the present invention shown in Fig. 10 differs from these known magnetic heads, in that part of that unit from the surface facing the magnetic recording medium at least to the rear end of the coil window is replaced with a non-magnetic substance 34, and the heads shown in Figs. 11 to 13 are the modified embodiments or improved examples of the embodiment of Fig. 10. Accordingly, the modifications known in the art in connection with the heads of JP-A-58-155513 and JP-A-59-207415 may be made to the magnetic heads of the present invention.

In addition, heads in which the unit mentioned above is made entirely of a non-magnetic substance are described in EP-A-0140977 and JP-A-59-142716, and these techniques can also be utilised.

The magnetic metal substance for use in the magnetic head of the present invention may be any material of high permeability which has a high saturation flux density. Typical materials may be well-known alloys such as Fe-Si alloys, Fe-Al-Si alloys (so-called sendust alloys), Ni-Fe alloys (so-called permalloys) and various amorphous alloys of high permeability. Amorphous alloys including various metal-metalloid amorphous alloys in which Fe-Co contains metalloid elements, metal-metal amorphous alloys principally composed of Co which have excellent corrosion-resistance and abrasion-resistance, and which exhibit excellent characteristics as binary or ternary alloys are preferable. Examples of such systems as Co-Zr, Co-Nb, Co-Nb-Zr, Co-Mo-Zr, Co-W-Zr, Co-Ni-Zr, Co-Zr-B, Co-Hf and Co-Ti.

The thickness of the magnetic metal substance is preferably 0.5 $\mu$m - 100 $\mu$m. A thickness value less than 0.5 $\mu$m is undesirable because of an increased magnetic reluctance. On the other hand, a value in excess of 100 $\mu$m is unnecessarily great, and particularly when manufacturing the magnetic metal substance by the use of thin film techniques, such a thickness is disadvantageous because of the long period of time required for the formation of the magnetic metal substance. For magnetic heads having the structures as shown in Figs. 10 to 13, as is known, it is advantageous in manufacture for the thickness of the magnetic metal substance to be set at about $\frac{1}{2}$ of the track width.

The magnetic metal substance may be a thin plate cut out of a bulky material or a ribbon produced by a rapid quenching method. However, it is more preferable to employ a magnetic metal film produced by thin film techniques such as sputtering or vacuum deposition. Particularly when fabricating the magnetic heads shown in Figs. 10 to 13, fabrication is difficult unless magnetic metal films are used. When using magnetic metal films, it is also possible to lower the eddy current loss and enhance the high frequency characteristics, by alternately stacking magnetic metal films and non-magnetic insulator films of e.g. $SiO_2$ or $Al_2O_3$.

The non-magnetic substance used in the present invention may be any material of excellent abrasion-resistance, e.g. selected from among non-magnetic ferrites, various ceramics, hard glass, etc. The high permeability ferrite used in the present invention may be a polycrystal or single crystal of Mn-Zn ferrite or Ni-Zn ferrite. Examples of magnetic heads in accordance with the present invention will now be described.

Example 1

A magnetic head shown in Fig. 1, a magnetic head with a non-magnetic substance substituted for the high permeability ferrite of the members 2 and 2' in Fig. 1, and the magnetic heads shown in Figs. 2, 5, 6 and 7a were fabricated using Zn ferrite as the non-magnetic substance, a polycrystal material of Mn-Zn ferrite as the high permeability ferrite, and sputtered amorphous alloy films having a composition of $Co_{84}Nb_{13}Zr_3$ (atomic-%) as the magnetic metal material. In the magnetic heads mentioned above, those shown in Figs. 5, 6 and 7a are embodiments of the present invention, and the others are examples for comparison purposes. Coils were wound on these heads, and inductances at 4 MHz, and outputs at 4 MHz provided when signals were recorded and reproduced with a metal tape were measured. The relative speed of the tape to the head was 3.8 ms$^{-1}$. Measured results are listed in Table 1.

## Table 1

| No. | Structure of Magnetic Head | Output C (Relative Value) | Inductance (Relative Value) | $C/\sqrt{L}$ (Relative Value) |
|---|---|---|---|---|
| 1 | Fig. 1<br>(2, 2': Ferrite substrate) | 1.0 | 1.0 | 1.0 |
| 2 | Fig. 1<br>(2, 2': Nonmagnetic substrate) | 0.88 | 0.60 | 1.14 |
| 3 | Fig. 2 | 0.97 | 0.99 | 0.98 |
| 4 | Fig. 5 | 0.92 | 0.61 | 1.18 |
| 5 | Fig. 6 | 0.94 | 0.62 | 1.19 |
| 6 | Fig. 7a | 0.94 | 0.55 | 1.26 |

As indicated in Table 1, when the heads Nos. 4, 5 and 6, being embodiments according to the present invention, are compared with the heads Nos. 1, 2 and 3 of the reference examples, they have an inferior output to No. 1 but have a smaller inductance. Also they have a better value for the ratio $C/\sqrt{L}$. Since the surface facing the tape is made of a non-magnetic substance, the present invention may also provide heads of low rubbing noise and excellent abrasion-resistance.

Next, the dimensions of the magnetic heads in these examples will be explained. Fig. 14 is a perspective view of a core for indicating the core dimensions of the magnetic head shown in Fig. 1. Symbols in Fig. 14 are as follows. Symbol w denotes the width of the core, symbol h the height of the core, symbol t the thickness of the core, symbol $\bar{g}$ the gap depth as in Fig. 7b, symbol gl a gap length, symbol k the distance from the surface facing the tape to the lower end of the slant portion of the coil window as in Fig. 7b, symbol l the height of the window, and symbol s the thickness of the magnetic metal substance. In

7

the embodiments and the reference examples, w was 2 mm, h was 2 mm, t was 60 $\mu$m, g was 50 $\mu$m, gl was 0.3 $\mu$m, k was 200 $\mu$m, l was 300 $\mu$m, and s̄ was 50 $\mu$m. The height h' of the non-magnetic substance shown in Figs. 2, 5, 6 and 7a, was 50 $\mu$m in Fig. 2 and 500 $\mu$m in any of Figs. 5, 6 and 7a. For the magnetic head shown in Fig. 7a, dimensions relevant to the groove 16 indicated by symbols a, a', b, b', c and c' in Fig. 7b were all set at 200 $\mu$m. The number of turns of the coil was 20 turns in each case.

Example 2

Next, magnetic heads such as those shown in Figs. 10, 11 and 12 were fabricated using the same materials as in Example 1 described above, and the outputs C and inductances L thereof were measured in the same way as in Example 1. Results are listed in Table 2. The foregoing sample No. 1 again is a reference example for comparison purposes.

Table 2

| No. | Structure of Magnetic Head | Output C (Relative Value) | Inductance L (Relative Value) | $C/\sqrt{L}$ (Relative Value) |
|---|---|---|---|---|
| 1 | Fig. 1 (2, 2': Ferrite substrate) | 1.0 | 1.0 | 1.0 |
| 7 | Fig. 10 | 1.12 | 0.68 | 1.35 |
| 8 | Fig. 11 | 1.16 | 0.70 | 1.39 |
| 9 | Fig. 12 | 1.16 | 0.63 | 1.46 |

The magnetic heads of the examples, in which the angled core and the magnetic metal substance are coupled as described before, are excellent heads because the magnetic path is well defined near to the gap, and hence the recording and reproducing efficiencies are high. Also, since the boundary between the magnetic metal substance and the non-magnetic substance is not parallel to the plane of the functional gap, no contour effect is encountered. With the present invention, the inductance is low and the ratio $C/\sqrt{L}$ is therefore excellent as indicated in Table 2, and furthermore, the rubbing noise is low and the abrasion resistance is high.

Next, the dimensions of the magnetic heads in these examples will be explained. For the magnetic head shown in Fig. 10, the core thickness t was 180 $\mu$m, the track width tw was 60 $\mu$m, the angle $\theta$ of the angled non-magnetic member 34 was 60°, and the height h' of the non-magnetic member 34 was 500 $\mu$m. The dimensions of the other parts were the same as in the reference example of Fig. 1 referred to in Example 1. Also, for the magnetic head shown in Fig. 11, the height h' of the non-magnetic member 34 was 500 $\mu$m, and the other dimensions were the same as for Fig. 10. For the magnetic head shown in Fig. 12, the dimensions a, a', b, b', c and c' were 200 $\mu$m, and the other dimensions were the same as for Fig. 10. The number of turns of the coil was 20 turns in each case.

Also the magnetic heads shown in Figs. 8 and 13 have a large value for the ratio $C/\sqrt{L}$. In addition, these magnetic heads are easily mass-produced because the coil can be mounted such that a pre-formed coil may be inserted between the coil window and the groove 16 or 36.

As described above, a magnetic head according to the present invention may have a high value of the ratio $C/\sqrt{L}$ and therefore has high output and low inductance. Moreover, it has low rubbing noise and is excellent in the abrasion-resistance as well as mass-producibility.

In the magnetic head of the present invention, conventional knowledges and known teachings may be adopted in connection with matters not specifically described in the present specification.

### Claims

1. A magnetic head having:
   a pair of first members (11,31) of a magnetic metal a pair substrates (14,14',34)of a non-magnetic material at least partially supporting said first members (11), there being a functional gap and a coil window (19) between parts of the first members (11,31);
   a core part (12,12',32), at least part of which is of a high permeability ferrite material, magnetically coupled to the fist members (11); and
   a coil (18) passing through the coil window (19) and encircling the first members (11,31);
   characterised in that:
   the coil (18) also encircles the substrate (14,14',34) of non-magnetic material.

2. A magnetic head according to claim 1, wherein all the core part (12,32) is of a high permeability ferrite material.

3. A magnetic head according to claim 1 or claim 2, wherein the core part (12,12'32) has two members separated at least by the first members (11).

4. A magnetic head according to claim 1 or claim 2, having a first surface facing a magnetic recording medium, and at least one side surface substantially perpendicular to the first surface and substantially parallel to the direction of movement of the magnetic recording medium, wherein the core part (12,32) is located on the side surface.

5. A magnetic head according to any one of the preceding claims, wherein at least one part of the substrate has a groove (16,36) therein substantially parallel to the plane of the functional gap, the coil (18) extending through the groove (16,36) and the coil window (19).

6. A magnetic head according to any one of the preceding claims wherein, in a first surface facing a magnetic recording medium, the boundary between the first members (31) and the substrate (34) is not parallel to the functional gap.

7. A magnetic head according to claim 6, wherein the first members (31) are substantially V-shaped films on corresponding protrusions of the substrate (34), the films having a substantially flat part at their apex with the flat parts of each film being adjacent each other and having the functional gap therebetween.

8. A magnetic head according to claim 7, having a non-magnetic gap material (37) between side surfaces of the films.

### Revendications

1. Tête magnétique comportant :
   un couple de premiers éléments (11,31) réalisés en un métal magnétique et un couple de substrats (14,14'; 34) réalisés en un matériau amagnétique et supportant au moins partiellement lesdits premiers éléments (11), un entrefer de service et une fenêtre (19) pour une bobine étant présents entre des parties des premiers éléments (11,31);
   une partie formant noyau (12,12',32), dont au moins une partie est réalisée en un matériau formé d'une ferrite de haute perméabilité, couplée magnétiquement aux premiers éléments (11); et
   une bobine (18) traversant la fenêtre (19) pour la bobine et entourant les premiers éléments (11,31);
   caractérisée en ce que
   la bobine (18) entoure également le substrat (14, 14',34) réalisé en un matériau amagnétique.

2. Tête magnétique selon la revendication 1, dans laquelle la totalité de la partie formant noyau (12,32) est réalisée en un matériau formé d'une ferrite de haute perméabilité.

3. Tête magnétique selon la revendication 1 ou 2, dans laquelle la partie formant noyau (12,12',32) possède deux éléments séparés au moins par les premiers éléments (11).

4. Tête magnétique selon la revendication 1 ou 2, possédant une première surface faisant face à un support d'enregistrement magnétique, et au moins une surface latérale sensiblement perpendiculaire à la première surface et sensiblement parallèle à la direction de déplacement du support d'enregistrement magnétique, la partie formant noyau (12,32) étant située sur la surface latérale.

5. Tête magnétique selon l'une quelconque des revendications précédentes, dans laquelle au moins une partie du substrat possède une rainure (16,36) sensiblement parallèle au plan de l'entrefer de service, la bobine (18) s'étendant dans la rainure (16,36) et dans la fenêtre (19) pour la bobine.

6. Tête magnétique selon l'une quelconque des revendications précédentes, dans laquelle, dans une première surface tournée vers le support d'enregistrement magnétique, la limite entre les premiers éléments (31) et le substrat (34) n'est pas parallèle à l'entrefer de service.

7. Tête magnétique selon la revendication 6, dans laquelle les premiers éléments (31) sont essentiellement des pellicules en forme de V situées sur des parties saillantes correspondantes du substrat (34), les pellicules possédant une partie sensiblement plane au niveau de leur sommet, les parties planes de chaque pellicule étant adjacentes l'une à l'autre et définissant entre elles l'entrefer de service.

8. Tête magnétique selon la revendication 7, possédant un matériau amagnétique d'entrefer (37) entre des surfaces latérales des pellicules.

## Ansprüche

1. Magnetkopf mit
einem Paar von ersten Gliedern (11, 31) aus einem magnetischem Material und einem Paar von die ersten Glieder (11) mindestens teilweise stützenden Substraten (14, 14', 34) aus einem nicht-magnetischem Material, wobei zwischen Teilen der ersten Glieder (11, 31) ein Funktions-Luftspalt und ein Spulenfenster (19) vorhanden sind,
einem Kernteil (12, 12', 32), von dem mindestens ein Teil aus einem Ferritmaterial hoher Permeabilität besteht und das mit den ersten Gliedern (11) magnetisch gekoppelt ist, und
einer das Spulenfenster (19) durchsetzenden und die ersten Glieder (11, 31) umschlingenden Spule (18),
dadurch gekennzeichnet, daß die Spule (18) auch das Substrat (14, 14', 34) aus nicht-magnetischem Material umschlingt.

2. Magnetkopf nach Anspruch 1, wobei der gesamte Kernteil (12, 32) aus einem Ferritmaterial hoher Permeabilität besteht.

3. Magnetkopf nach Anspruch 1 oder 2, wobei der Kernteil (12, 12', 32) zwei mindestens durch die ersten Glieder (11) voneinander getrennte Glieder aufweist.

4. Magnetkopf nach Anspruch 1 oder 2 mit einer einem magnetischen Aufzeichnungsmedium zugewandten ersten Fläche und mindestens einer zu der ersten Fläche im wesentlichen senkrechte und zur Bewegungsrichtung des magnetischen Aufzeichnungsmediums im wesentlichen parallelen Seitenfläche, wobei der Kernteil (12, 32) an der Seitenfläche angeordnet ist.

5. Magnetkopf nach einem der vorhergehenden Ansprüche, wobei mindestens ein Teil des Substrats eine im wesentlichen parallel zur Ebene des Funktions-Luftspalts verlaufende Nut (16, 36) aufweist und die Spule (18) durch die Nut (16, 36) und das Spulenfenster (19) verläuft.

6. Magnetkopf nach einem der vorhergehenden Ansprüche, wobei in einer einem magnetischen Aufzeichnungsmedium zugewandten ersten Fläche die Grenze zwischen den ersten Gliedern (31) und dem Substrat (34) zu dem Funktions-Luftspalt nicht parallel ist.

7. Magnetkopf nach Anspruch 6, wobei die ersten Glieder (31) im wesentlichen V-förmige Schichten auf entsprechenden Vorsprüngen des Substrats (34) sind, die an ihrer Spitze einen im wesentlichen flachen Teil aufweisen, wobei die flachen Teile der Schichten einander benachbart sind und den Funktions-Luftspalt bilden.

8. Magnetkopf nach Anspruch 7 mit einem zwischen den Seitenflächen der Schichten vorhandenen nicht-magnetischen Luftspalt-Material (37).

## FIG. 1
## PRIOR ART

## FIG. 2
## PRIOR ART

## FIG. 3

## FIG. 4

## FIG. 5

## FIG. 6

# FIG. 7a

# FIG. 7b

# FIG. 8

# FIG. 9

# FIG. 10

# FIG. 11

## FIG. 12

## FIG. 13

## FIG. 14